# FASCICULE DE BREVET EUROPEEN

(11) **EP 0 518 741 B1**
(45) Date de publication et mention de la délivrance du brevet: **16.07.1997**
(21) Numéro de dépôt: 92401550.6
(22) Date de dépôt: 05.06.1992
(51) Int. Cl.: G11B 5/53

(54) **Dispositif et méthode pour l'enregistrement et/ou la lecture d'informations sur une bande magnétique**
Vorrichtung und Verfahren zum Aufzeichnen und/oder Wiedergeben von Informationen mit einem Magnetband
Apparatus and method for recording and/or reading information on a magnetic tape

(30) Priorité: 12.06.1991 FR 9107133
(43) Date de publication de la demande: 16.12.1992
(73) Titulaire: SCHLUMBERGER INDUSTRIES, F-92120 Montrouge (FR)
(72) Inventeur: Juncker, Richard, F-92370 Chaville (FR); Abeille, Pierre, F-92160 Antony (FR)

(56) Documents cités:
- DE-A- 2 609 335
- DE-B- 1 207 442
- US-A- 4 611 255
- PATENT ABSTRACTS OF JAPAN vol. 11, no. 40 (P-544) 5 Février 1987 & JP-A-61 208 612

## Description

La présente invention concerne un dispositif et une méthode pour l'enregistrement et/ou la lecture d'informations sur une bande magnétique et plus précisément un support de têtes magnétiques tournantes et une méthode permettant de positionner avec précision les têtes magnétiques, ainsi qu'un écrin pour le stockage, la pose ou la dépose dudit support.

L'invention se rapporte à un dispositif comprenant un cylindre fixe constitué d'un tambour inférieur et d'un tambour supérieur coaxiaux, entre lesquels est disposé un support rotatif coaxial comprenant sur le pourtour au moins une tête d'enregistrement et/ou de lecture. Une bande magnétique est susceptible d'être déplacée sur le cylindre, des informations étant alors stockées ou lues sur la bande magnétique à l'aide de la ou des têtes magnétiques.

Il est connu depuis longtemps d'enregistrer et de lire des données sur une bande magnétique au moyen d'un appareil comportant une ou plusieures têtes magnétiques tournantes.

Ces têtes magnétiques sont généralement fixées, par collage par exemple, à la périphérie d'un plateau ayant la forme d'un disque et tournant à l'intérieur d'un cylindre fixe autour d'un axe de rotation confondu avec l'axe longitudinal du cylindre. Les têtes magnétiques se déplacent dans une fente équatoriale du cylindre. Le plateau est généralement fixé à un contre-plateau à l'aide de vis à la périphérie du plateau. Ce moyen de fixation crée des contraintes et donc des déformations qui nuisent au bon alignement des têtes magnétiques lesquelles doivent être alignées en hauteur avec une précision voisine de 1 micron. On connaît une telle structure d'après les documents DE-A-2609335 (D1) et US-A-4611255 (D2).
Le document D1 décrit un dispositif pour l'enregistrement et/ou la lecture d'informations sur une bande magnétique comprenant un cylindre muni d'une fente et un support de têtes magnétiques tournantes monté dans ledit cylindre et permettant le positionnement desdites têtes magnétiques par rapport à la fente dudit tambour.
Le support de têtes magnétiques comporte un plateau et un contre-plateau ayant un axe de rotation commun et ayant chacun une surface d'appui. Le plateau comprend les têtes magnétiques sur son pourtour ainsi que des moyens (vis) pour mettre en contact les surfaces d'appui entre elles. Les caractéristiques du préambule de la revendication 1 sont divulguées par D1. Le document D2 décrit un dispositif pour l'enregistrement et/ou la lecture d'informations sur une bande magnétique comprenant un cylindre muni d'une fente et un support de têtes magnétiques tournantes permettant le positionnement desdites têtes magnétiques par rapport à la fente dudit tambour.
Le support de têtes magnétiques comporte un plateau et un contre-plateau ayant un axe de rotation commun et ayant chacun une surface d'appui. Le contre-plateau est monté dans la partie inférieure du cylindre (zone située sous la fente) alors que le plateau constitue la partie supérieure du cylindre (zone située au dessus de la fente).
Le plateau comprend les têtes magnétiques sur son pourtour ainsi que des moyens (vis) pour mettre en contact les surfaces d'appui entre elles.

On réalise alors l'importance de disposer d'une méthode et d'un dispositif permettant un bon positionnement des têtes magnétiques. De plus, les têtes magnétiques s'usent ou se cassent et il est nécessaire de changer régulièrement le plateau les supportant. Cette manoeuvre est généralement longue car elle nécessite le repositionnement des têtes magnétiques ou du plateau les contenant par rapport à son support dans l'enregistreur.

La présente invention propose un dispositif support de têtes magnétiques qui ne nécessite aucun réglage de positionnement des têtes lorsque le support est installé dans un enregistreur/lecteur. L'installation de ce support est aisée et rapide. L'invention concerne également une méthode de positionnement précis et rapide des têtes magnétiques d'un enregistreur /lecteur. L'invention propose aussi un écrin coopérant avec le support des têtes magnétiques et permettant de placer ou d'enlever rapidement le support de l'enregistreur/lecteur sans risque d'endommager les têtes magnétiques et sans procéder à un nouveau réglage des têtes.
De façon plus précise l'invention concerne un dispositif tel que défini à la revendication 1.

Selon une forme de réalisation préférée,le plateau et le contre-plateau sont fixés l'un à l'autre uniquement par une vis centrale.

Les surfaces d'appui centrales ont avantageusement la forme d'un anneau centré autour de l'axe de rotation commun et les zones d'appui périphériques ont la forme d'une couronne interrompue par des ouvertures par lesquelles passent les têtes magnétiques.

Dans ce cas, la zone d'appui périphérique et la surface d'appui centrale du contre-plateau sont dans un même plan perpendiculaire à l'axe de rotation commun.

Le dispositif comporte des moyens d'indexation angulaire du plateau et du contre-plateau entre eux. Ces moyens sont avantageusement une fente ou un trou coopérant avec une goupille.

L'invention concerne également un écrin tel que définie à la revendication 13 permettant la pose ou la dépose aisée du plateau sans risque d'endommager les têtes magnétiques.

L'invention concerne aussi une méthode de positionnement des têtes magnétiques tournantes d'un enregistreur/lecteur de bandes magnétiques tel que définie à la revendication 16.

Un mode de réalisation avantageux de la méthode est défini à la revendication 17.

Une caractéristique de l'invention est définie à la revendication 18.

Selon une réalisation avantageuse, le plateau est usiné par rodage en exerçant une force de pression sur sa surface centrale plus forte que sur sa zone périphérique.

Selon une autre caractéristique de l'invention, on fixe le plateau sur le contre-plateau par une vis centrale.

De façon avantageuse, on place le plateau dans un écrin, soit pour le stocker en le protégeant des dommages qu'il pourrait subir, à la suite d'un choc par exemple, soit pour le monter sur le contre-plateau d'un enregistreur/lecteur en protégeant les têtes magnétiques d'un choc éventuel. Le plateau est fixé à un support de plateau lequel est lui-même fixé à une boite protectrice. Cette boite peut être fermée par un couvercle.

Selon une caractéristique de la méthode, lorsque l'on désire retirer le plateau du contre-plateau, on place le plateau selon une position angulaire prédéterminée, on positionne et on fixe le support du plateau sur le plateau, on positionne et on fixe la boîte protectrice sur le support de plateau, on désolidarise le plateau dudit contre-plateau et on extrait l'ensemble formé par le plateau, le support de plateau et la boîte protectrice. Cet ensemble peut avantageusement être fermé par un couvercle.

D'autres particularités et avantages ressortiront de la description qui suit, donnée à titre d'exemple et sans caractère limitatif, et se rapportant aux dessins annexés dans lesquels:
- la figure 1 est une vue partielle en coupe d'un tambour d'analyse d'un enregistreur/lecteur de bandes magnétiques,
- la figure 2 montre l'assemblage du plateau sur le contre-plateau,
- la figure 3 est une vue de dessous du plateau portant les têtes magnétiques,
- la figure 4 est une vue de dessus du contre-plateau ainsi que des moyens de fixation du tambour supérieur avec le tambour inférieur,
- la figure 5 illustre le principe de la présente invention pour le positionnement aisé et rapide des têtes magnétiques et
- la figure 6 est une vue éclatée d'un écrin permettant le stockage, le montage ou le démontage du plateau.

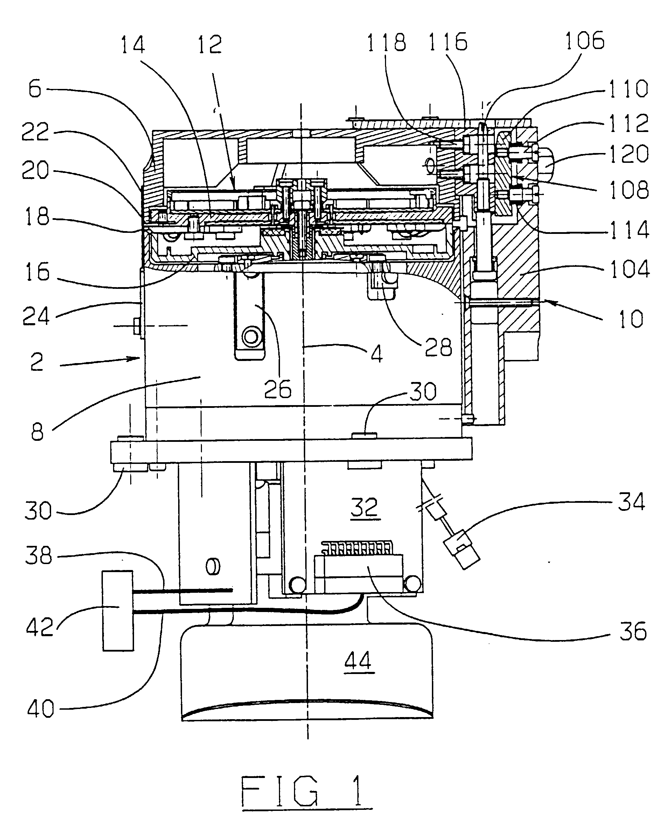

Le tambour d'analyse (appelé aussi "scanner) représenté sur la figure 1 comporte un cylindre fixe 2 d'axe longitudinal 4 composé d'un tambour supérieur 6 et inférieur 8. Ces tambours sont fixes et sont coaxiaux, ayant pour axe commun l'axe 4. Les deux tambours inférieur et supérieur sont fixés ensemble par des moyens de fixation 10. Le tambour d'analyse comporte également un support de têtes magnétiques 12 composé d'un plateau 14 et d'un contre-plateau 16. Le plateau 14 et le contre-plateau 16 ont sensiblement la forme d'un disque ayant un axe de rotation commun qui est confondu avec l'axe longitudinal 4 du cylindre 2. Des têtes magnétiques 18 sont fixées à intervalles réguliers à la périphérie du plateau 14 et positionnées dans une fente 20 laquelle est constituée par l'espace libre laissé entre les deux tambours 6 et 8. Une bande magnétique, représentée schématiquement par 22, peut se déplacer devant la fente 20 et donc devant les têtes magnétiques 18 pour la lecture et/ou l'écriture d'informations sur la bande. Des guides de bandes 24, 26 et 28 sont disposés sur la surface du tambour inférieur 8 selon un trajet hélicoïdal.

Le tambour d'analyse de la figure 1 comporte également des moyens non-représentés pour la mise en rotation du plateau et du contre-plateau, des moyens de fixation 30 du tambour d'analyse à la platine de l'enregistreur/lecteur, une enceinte 32 contenant différents circuits électroniques, un connecteur d'alimentation électrique 34, une barrette de connexion de fils 36, des connecteurs électriques 38 et 40 ainsi qu'une broche 42 pour l'entrée et la sortie de différents signaux électriques pour le fonctionnement du tambour d'analyse et une enceinte 44 comprenant un codeur d'asservissement de position angulaire du plateau 14 et du contre-plateau 16.

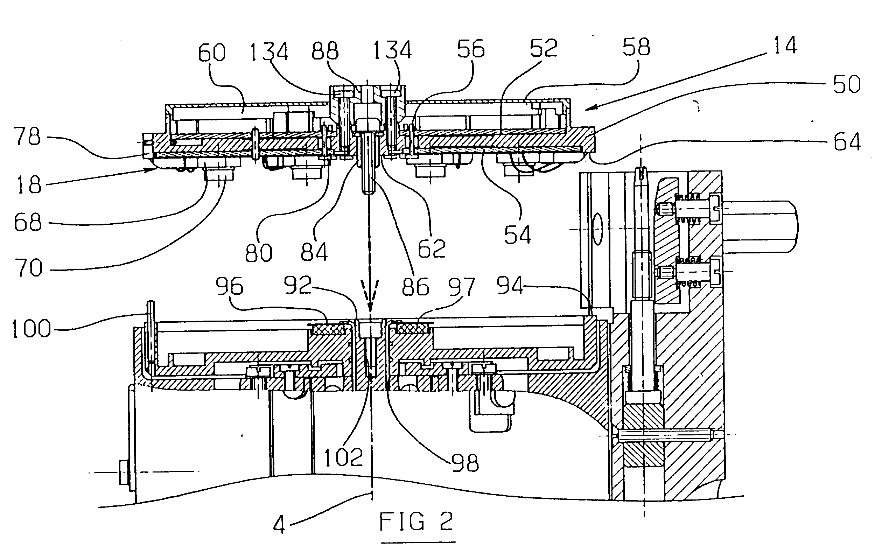

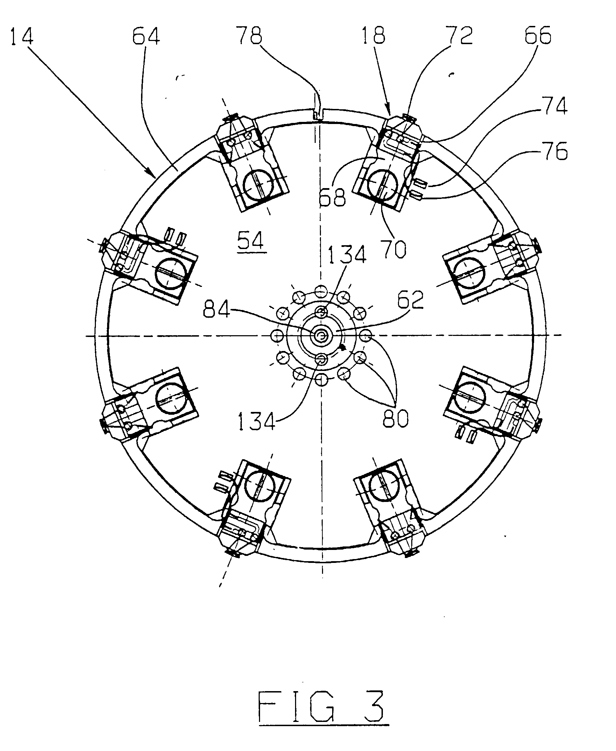

En se reportant aux figures 2 et 3, on remarque que le plateau a sensiblement la forme d'un disque ayant pour axe de rotation l'axe longitudinal 4 du cylindre. Le plateau est formé principalement d'une structure métallique 50 prise en sandwich par deux plaques électriquement isolantes 52 et 54 servant de support à des circuits électriques ou électroniques. Des connecteurs électriques 56 permettent de faire la jonction électrique entre les deux plaques 52 et 54 des circuits électroniques. Un couvercle de blindage 58 isole la partie supérieure du plateau. Un espace 60 est laissé libre pour accommoder le volume des composants électroniques. Le plateau comporte une surface d'appui centrale 62 ayant une forme annulaire centrée autour de l'axe de rotation 4. Le plateau comporte également une zone d'appui périphérique 64 (voir figure 3) ayant la forme d'une couronne située à la périphérie du plateau. Cette couronne est interrompue par des logements 66 pour le passage des têtes magnétiques 18. Les têtes magnétiques sont au nombre de 8 dans l'exemple représenté, mais ce nombre peut être variable. Les têtes magnétiques sont régulièrement espacées à la périphérie du plateau 14.

Chaque tête magnétique est composée d'un socle 68 fixé au plateau 14 par une vis 70. A l'extrémité du socle 68 est fixée la tête magnétique proprement dite 72 qui est connectée au circuit électronique, non représenté, par des fils de connexion 74 et 76. La tête magnétique proprement dite 72 est collée sur le socle et positionnée par rapport au référentiel du plateau 14. Cette opération de positionnement, bien connue, fait appel à des moyens optiques. Le référentiel du plateau est constitué par l'axe du plateau (axe réferencé 84), par le plan 122 formé par les zones périphériques 94 et surfaces centrales 92 du contre-plateau non contraint par le montage du plateau et enfin par un repère d'angle. Le plateau comporte un fente 78 d'indexation angulaire. Cette dernière pourrait être obtenue par d'autres moyens, tels qu'un trou par exemple. Des plots 80 assurent la connexion électrique par contact avec des plages métalliques 82 du contre-plateau.

Le plateau 14 comporte également un axe 84 centré autour de l'axe de rotation 4. Une vis 86, destinée à fixer le plateau sur le contre-plateau, est logée dans cet axe 84. Elle est maintenue à son dévissage à l'aide d'une pièce 88 qui la rend prisonnière. De plus, en fin de course au dévissage, le plateau s'élève lorsque l'on continue à dévisser la vis ce qui extrait l'axe 84 de son logement dans lequel il est légèrement serré (pour éviter les jeux mécaniques).

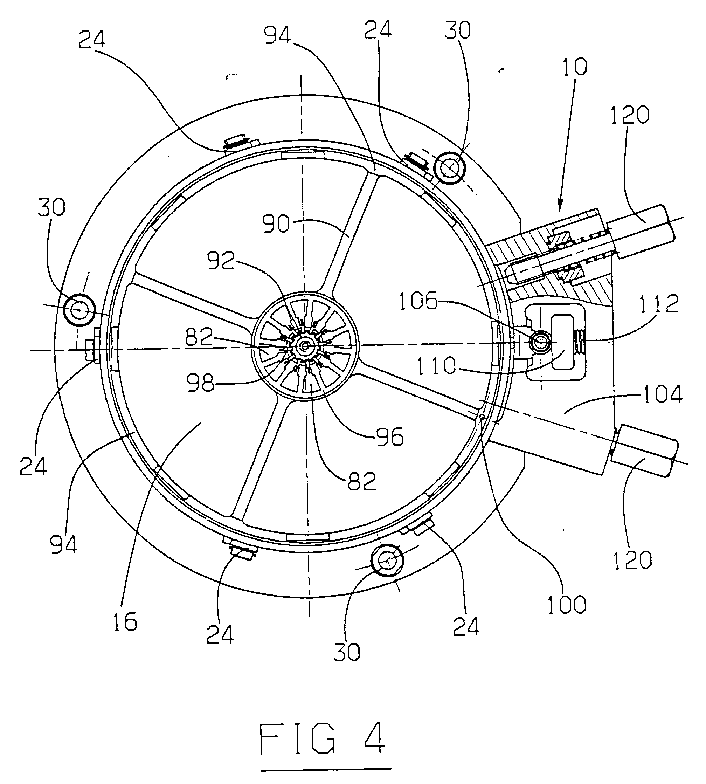

En se reportant aux figures 2 et 4, on remarque que le contre-plateau 16 a sensiblement la forme d'un disque de même dimension que le plateau 14. Le contre-plateau 16 comporte des nervures 90 afin d'augmenter sa rigidité mécanique. Il comporte une surface d'appui centrale 92 ayant une forme annulaire centrée autour de l'axe de rotation du contre-plateau , ainsi qu'une zone d'appui périphérique 94. Cette zone a la forme d'une couronne centrée autour de l'axe de rotation et située à la périphérie du contre-plateau 16. Cette couronne est interrompue au niveau des têtes magnétiques 18. Des plages électriquement conductrices 82 sont disposées en couronne autour de l'axe de rotation et reposent sur une feuille électriquement isolante 96 (en "Mylar" par exemple). Cette feuille est également placée sur un support élastique 97 qui permet d'assurer une pression de contact des plots 80 du plateau contre les plages 82. Chaque plage 82 est connectée à un fil conducteur 98 qui part le long de l'axe de rotation vers les circuits électriques du tambour d'analyse. Une goupille 100 permet l'indexation angulaire du contre-plateau. Cette goupille coopère avec la fente 78 du plateau.

Sur la figure 4 on remarque également les moyens de fixation 30 du tambour d'analyse à la platine de l'enregistreur, les guides de bande magnétique 24 et les moyens de fixation 10 du tambour supérieur 6 sur le tambour inférieur 8.

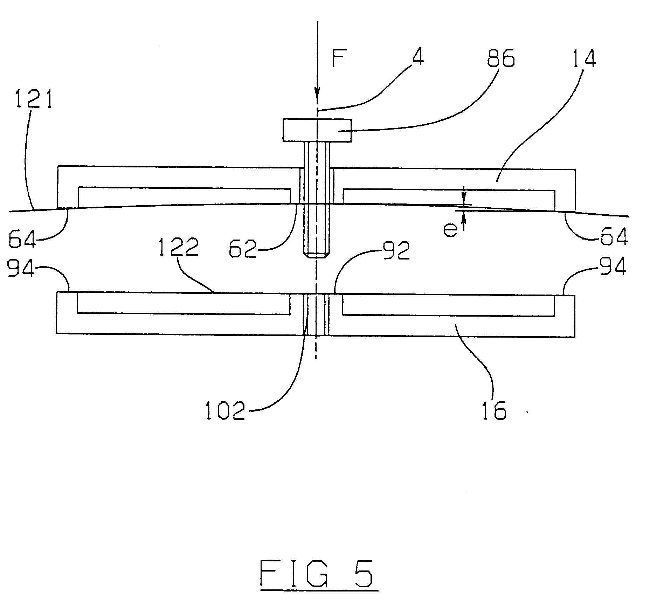

Pour positionner le plateau 14 sur le contre-plateau 16, on oriente d'abord le plateau 14 par rapport au contre-plateau 16 de sorte que la goupille d'indexation 100 rentre dans la fente 78. Les zones d'appui périphériques 64 du plateau viennent en contact avec les zones d'appui périphériques 94 du contre-plateau. Comme on le verra par la suite au regard de la figure 5, dans cette position les surfaces d'appui centrales 62 et 92 ne sont pas encore en contact l'une avec l'autre du fait de la forme particulière donnée au plateau 14. Le contre-plateau 16 comporte un alésage 102 percé selon son axe de rotation et muni d'un taraudage. La vis 86 du plateau 14 vient se fixer dans le taraudage de l'alésage 102 jusqu'a ce que les surfaces d'appui centrales 62 et 92 viennent en appui. L'axe 84 vient se loger dans l'alésage 102 de façon légèrement serrée. Les têtes magnétiques sont alors parfaitement positionnées et se trouvent au regard de la fente 20 devant laquelle défile la bande magnétique.

Les moyens de fixation du tambour supérieur 6 au tambour inférieur 9 permettent un alignement parfait de la surface de ces tambours au niveau de la fente 20 de façon à former une surface lisse sur laquelle se déroule la bande magnétique. En se reportant aux Figures 1 et 4, on remarque que les moyens de fixation 10 comportent une pièce principale 104 ayant sensiblement la forme d'un "V" tronqué (visible sur la figure 4) et fixée au tambour inférieur 8. Dans sa partie centrale cette pièce principale 104 comporte un évidement dans lequel sont logés d'une part une vis de manoeuvre 106 et d'autre part un dispositif de freinage 108 composé d'un patin 110 maintenu par deux guides 112 et appuyé par des ressorts 114 contre une pièce de guidage 116 du tambour supérieur 6. Cette pièce 116 est maintenue par deux vis 118 et a sensiblement la forme d'un "T". Lorsque l'on dévisse la vis 106 le guide 116 monte avec le tambour supérieur. Le patin 110, en s'appuyant contre le guide 116, évite que le tambour supérieur ne retombe ce qui pourrait endommager les têtes magnétiques. Cette remarque s'applique également lorsque le tambour supérieur est mis en place. Deux vis 120 sont utilisées pour bloquer le tambour supérieur lorsqu'il est en position.

Sur la figure 5 qui illustre schématiquement le principe de positionnement des têtes magnétiques, le plateau 14 et le contre-plateau 16 sont représentés très schématiquement en coupe. Lorsque le plateau 14 et le contre-plateau 16 ne sont pas fixés ensemble, la surface d'appui centrale 92 et la zone d'appui périphérique 94 du contre-plateau 16 sont situées dans un même plan 122 perpendiculaire à l'axe de rotation 4. Par contre, la surface d'appui centrale 62 et la zone d'appui périphérique 64 du plateau 14 ne se trouvent pas dans un même plan mais la surface centrale 62 est légèrement en retrait d'une distance e par rapport à la zone d'appui périphérique 64. En quelque sorte, la surface centrale 62 et la zone périphérique 64 se trouvent sur une surface fictive 121 de forme concave. La distance e, qui représente un creux, est d'environ 50 microns. En rapprochant le plateau 14 vers le contre-plateau 16, les zones d'appui périphériques 64 et 94 vont d'abord venir en contact, les surfaces d'appui centrales 62 et 92 étant alors éloignées de la distance e. En serrant la vis 86 dans le taraudage de l'alésage 102, les surfaces centrales 62 et 92 vont se rapprocher jusqu'à venir en contact. Ceci est possible grace à une certaine flexibilité du plateau 14 et du contre-plateau 16. Une fois la vis 86 serrée, le contre-plateau 16 est légèrement déformé et le plan 122 est incurvé.

De façon avantageuse on réalise-le creux d'épaisseur e entre la surface centrale 62 et la zone d'appui périphérique 64 du plateau 14 par rodage du plateau sur une surface parfaitement plane en exerçant une pression avec une force F sur la partie centrale 62. Cette force peut être par exemple de l'ordre de 20 Newton. En supprimant la force F, le plateau retrouve sa position initiale du fait de son élasticité et un creux d'épaisseur e se forme. L'épaisseur e du creux dépend de la force F appliquée et de la rigidité du plateau. On remarque que le plateau 14 peut être assimilé à un ressort.

Le contre-plateau 16 est une pièce mécanique relativement simple à fabriquer et dont les propriétés mécaniques, notamment sa rigidité, sont facilement reproductibles d'un contre-plateau à l'autre. Les contre-plateaux 16 ont donc tous sensiblement les mêmes propriétés mécaniques, et notamment la même rigidité. A la fabrication, les contre-plateaux qui auraient des différences mécaniques trop éloignées par rapport aux spécifications initiales seraient mises au rebut. Par contre le plateau 14 est une pièce plus compliquée à fabriquer que le contre-plateau 16 et ses propriétés mécaniques et notamment sa rigidité ne sont pas toujours reproductibles. Ceci est dû notamment au fait que de nombreux éléments, tels que des circuits et composants électroniques, sont rapportés sur le plateau.

La méthode de positionnement des têtes magnétiques selon la présente invention consiste alors à maintenir les têtes magnétiques sur le plateau 14, par vissage à l'aide des vis 70, à fixer le plateau 14 sur un contre-plateau 16, qui est un plateau standard, et à régler le positionnement des têtes magnétiques à l'aide de moyens de positionnement bien connus. Ces moyens sont habituellement optiques, tel qu'un banc optique métrologique. On fixe définitivement la position des têtes magnétiques par collage par exemple. On démonte alors le plateau 14 en dévissant la vis 86 et le plateau est alors prêt à être monté sur le contre-plateau 16 d'un enregistreur, sachant que le contre-plateau utilisé au laboratoire pour le positionnement des têtes magnétiques et le contre-plateau de l'enregistreur sont pratiquement identiques et ont notamment la même rigidité mécanique. Il suffit alors de serrer la vis 86 de façon à mettre en appui d'abord les zones d'appui périphériques 64 et 94 entre elles et puis les surfaces d'appui centrales 62 et 92 entre elles. Pour un plateau donné, les têtes magnétiques reprendront toujours la même position par fixation du plateau 14 sur un contre-plateau 16 puisque ces contre-plateaux 16 ont tous les mêmes caractéristiques. On peut donc monter un plateau donné sur n'importe quel contre-plateau et obtenir le même positionnement des têtes magnétiques. On remarque que l'on contrôle par ce dispositif la pression de contact sur les bords du contre-plateau. Avec ce montage, on arrive à positionner les têtes magnétiques avec une précision en hauteur de l'ordre de un micron.

Il est à remarquer que la solution consistant à avoir des pièces massives pour le plateau 14 et/ou le contre-plateau 16 n'est pas envisageable à cause de l'inertie trop grande qu'auraient ces pièces. En effet, le plateau et le contre-plateau subissent des accélérations qui peuvent aller jusqu'à 13 g dans les enregistreurs magnétiques. On se heurterait également à la fatigue des roulements maintenant des pièces trop massives. De plus, la puissance électrique nécessaire aux accélérations et décélérations rapides du plateau serait trop importante.

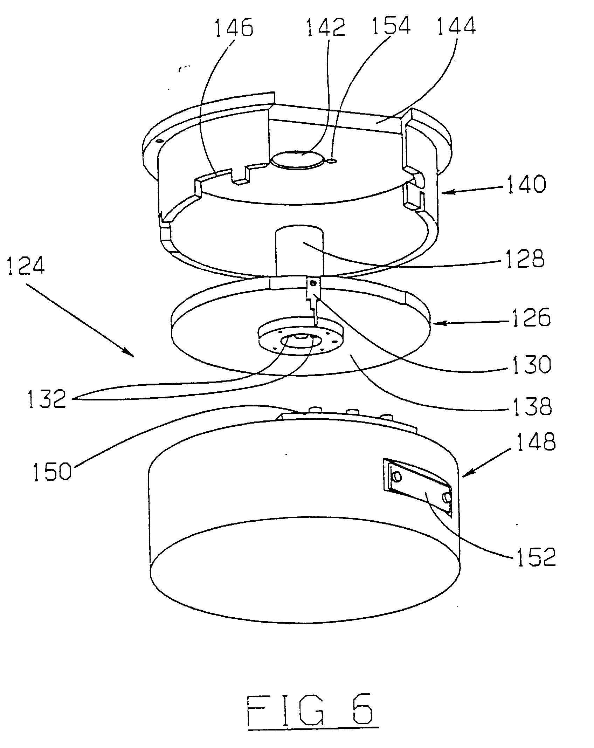

Le plateau peut avantageusement être stocké dans un écrin 124 représenté en vue éclatée sur la figure 6 (le plateau n'est pas représenté sur la figure 6). Cet écrin permet de monter ou de démonter aisément le plateau 14 sur le contre-plateau 16. L'écrin comporte un support de plateau 126 muni d'un manchon cylindrique creux 128 monté coaxialement sur le support de plateau 126. Un ergot 130 peut rentrer dans la fente d'indexation angulaire 78 du plateau. Deux vis 132 peuvent se fixer dans des gorges filetées 134 du plateau (visible sur la figure 2) de façon à fixer le plateau sur la face inférieure 138 du support de plateau. L'écrin comporte également une boîte protectrice 140 munie d'un évidement central 142 dans lequel vient se loger l'extrémité du manchon 128 du support de tête. Un dégagement 144 permet de positionner angulairement la boîte protectrice autour de la pièce de maintien 104 des deux tambours supérieur et inférieur. La boîte comporte également des dégagements 146 pour les guides de bande 24. Un couvercle 148 entoure et ferme la boîte protectrice. Un capot 150 ferme le dégagement 144 quand la boîte est fermée. Enfin, une fenêtre 152 permet d'identifier le plateau contenu à l'intérieur de la boîte.

Pour retirer un plateau fixé sur un contre-plateau dans un enregistreur/lecteur ou fixé sur un contre-plateau au laboratoire pour le positionnement des têtes magnétiques par exemple, on positionne angulairement le plateau dans une position donnée à l'aide d'un doigt d'indexation rétractable (non representé). On place ensuite le support de plateau 126 sur le plateau à extraire en mettant l'ergot 130 dans la fente 78 et on visse le plateau en regard de la face 138 du support 126 à l'aide des vis 132 se vissant dans les logements filetés 134 du plateau. On place alors la boîte protectrice 140 sur le support 126 que l'on visse à la boîte par une vis passant à travers le trou 154 de la boîte 140. On dévisse ensuite la vis centrale 86 de maintien du plateau sur le contre-plateau. On peut alors extraire le plateau fixé au support 126 et à la boîte de support 140. Il reste à placer le couvercle 152 pour fermer complétement la boite 140.

Pour monter un plateau sur le contre-plateau d'un enregistreur, on procède aux mêmes opérations en sens inverse. On commence donc par enlever le couvercle 148, on positionne la boîte protectrice 140 grace au dégagement 144 coopérant avec la forme en V de la pièce 104, on visse la vis centrale 86 du plateau dans le logement 102 du contre-plateau à travers la colonne creuse 128, on dévisse les deux vis 132 qui maintiennent le support 126 au plateau et on retire le plateau et la boîte protectrice 140.

On remarque que l'opération de mise en place ou de retrait d'un plateau est simple et rapide. De plus grace au dispositif selon l'invention, les têtes magnétiques sont automatiquement positionnées et ceci avec une précision de l'ordre de un micron.

## Revendications

1. Dispositif pour l'enregistrement et/ou la lecture d'informations sur une bande magnétique (22) comprenant un cylindre (2) muni d'une fente (20) et un support (12) de têtes magnétiques tournantes (18) monté dans ledit cylindre, et permettant le positionnement desdites têtes magnétiques (18) par rapport à la fente dudit tambour, le support de têtes magnétiques comportant un plateau (14) et un contre-plateau (16) ayant un axe de rotation commun (4), ledit plateau comprenant lesdites têtes magnétiques (18) sur son pourtour, et le plateau (14) et le contre-plateau (16) ayant chacun sensiblement la forme d'un disque, ledit dispositif étant caractérisé en ce que le plateau (14) et le contreplateau (16) comprennent chacun à la fois une zone d'appui périphérique (64-94) et une surface d'appui centrale (62-92) et des moyens (86) pour déformer le plateau (14) et le contreplateau (16) de façon que soient en contact les zones d'appui périphériques entre elles et les surfaces d'appui centrales entre elles.

2. Dispositif selon la revendication 1 caractérisé en ce que le plateau comporte un axe (84) et le contre-plateau comporte un alésage (102) situés autour dudit axe de rotation, l'alésage (102) dudit contre-plateau (16) ayant un taraudage, et lesdits moyens de mise en contact comprenant une vis (86) se vissant dans ledit taraudage pour mettre en contact lesdites zones d'appui (64-94) entre elles et les surfaces d'appui centrales (62-92) entre elles.

3. Dispositif selon la revendication 2 caractérisé en ce que ledit plateau (14) comporte une pièce de maintien (88) qui rend ladite vis prisonnière lors de son dévissage et qui permet l'extraction du plateau.

4. Dispositif selon l'une des revendications précédentes caractérisé en ce que lesdites surfaces d'appui centrales (62-92) ont chacune la forme d'un anneau centré autour dudit axe de rotation commun (4).

5. Dispositif selon l'une des revendications précédentes caractérisé en ce que lesdites zones d'appui périphériques (64-94) ont chacune la forme d'une couronne interrompue, au moins pour l'une desdites zones, par des ouvertures (66) par lesquelles passent lesdites têtes magnétiques (18).

6. Dispositif selon l'une des revendications précédentes caractérisé en ce que ledit dispositif comporte des moyens d'indexation angulaire (78-100) du plateau et du contre-plateau.

7. Dispositif selon la revendication 6 caractérisé en ce que lesdits moyens d'indexation comporte une goupille (100) fixée sur l'un du plateau et du contre-plateau et une fente (78) ou trou d'indexation percé dans l'autre du plateau et du contre-plateau, ladite fente ou trou coopérant avec ladite goupille.

8. Dispositif selon l'une des revendications précédentes caractérisé en ce que le plateau (14) comporte des plots de connexion électrique (80) et le contre-plateau (16) comporte des plages conductrices (82), lesdits plots de connexion coopérant avec lesdites plages.

9. Dispositif selon la revendication 8 caractérisé en ce que ledit contre-plateau comporte un support élastique (97) sur lequel sont maintenues lesdites plages conductrices (82), lesdits plots de connexion électrique (80) et lesdites plagesconductrices (82) coopérant en assurant une pression de contact entre lesdits plots et lesdites plages.

10. Dispositif selon l'une des revendications précédentes caractérisé en ce que ledit cylindre (2) se compose de deux tambours inférieur (8) et supérieur (6) de forme sensiblement cylindrique et de même diamètre, lesdits tambours étant montés solidairement entre eux par des moyens de fixation (10) autour d'un même axe qui correspond audit axe de rotation commun (4) et en laissant une distance libre entre lesdits tambours, ladite distance libre définissant ladite fente (20).

11. Dispositif selon le revendication 10 caractérisé en ce que lesdits moyens de fixation (10) des tambours comportent des moyens de positionnement (106-116) du tambour supérieur par rapport au tambour inférieur.

12. Dispositif selon la revendication 11 caractérisé en ce que lesdits moyens de fixation (10) comportent des moyens de freinage (110-112-114) pour éviter la chute du tambour supérieur sur le tambour inférieur au cours du montage ou démontage du tambour supérieur.

13. Ecrin pour le stockage, la pose ou la dépose dudit plateau (14) sur ledit contre-plateau (16) tels que définis à l'une des revendications 1 à 10, caractérisé en ce qu'il comporte un support de plateau (126) muni d'un élément d'indexation angulaire (130) et de moyens de fixation (132) du plateau, et une boîte protectrice (140) munie de moyens de fixation (142, 154) dudit support de plateau dans ladite boîte protectrice.

14. Ecrin selon la revendication 13 caractérisé en ce qu'il comporte en outre un couvercle (152) fermant ladite boîte protectrice.

15. Ecrin selon la revendication 13 ou 14 caractérisé en ce que ladite boîte protectrice (140) comporte des moyens de fixation angulaire (144) par rapport aux moyens de fixation (10) des tambours supérieur (6) et inférieur (8) qui composent le cylindre (2), à l'intérieur duquel sont montés le plateau (14) et le contre-plateau (16).

16. Méthode de positionnement des têtes magnétiques tournantes d'un enregistreur/lecteur de bandes magnétiques, les têtes magnétiques (18) étant fixées à la périphérie d'un plateau tournant (14) qui comporte une surface d'appui centrale (62) et une zone d'appui périphérique (64), ledit plateau étant destiné à être fixé à un contre-plateau (16) qui comporte également une surface d'appui centrale (92) et une zone d'appui périphérique (94) méthode selon laquelle:
a) ledit plateau est usiné de sorte que ladite surface centrale (62) du plateau soit en retrait par rapport à un plan contenant ladite zone périphérique (64) du plateau et perpendiculaire à l'axe de rotation (4) du plateau tournant,
b) le plateau est fixé sur un contre-plateau standard en laboratoire et les têtes magnétiques sont positionnées sur le plateau,
c) la position des têtes magnétiques est ajustée et les têtes magnétiques sont fixées au plateau,
d) le plateau est démonté du contre-plateau standard,
e) le plateau est monté sur le contre-plateau de l'enregistreur/lecteur identique au contre-plateau standard en mettant en appui d'abord lesdites zones d'appui périphériques entre elles puis lesdites zones d'appui centrales entre elles.

17. Méthode selon la revendication 16 caractérisée en ce que lorsque les zones d'appui périphériques (64-94) ne sont pas en contact entre elles, la surface d'appui centrale (62) et la zone d'appui périphérique (64) du plateau se situent sur une surface fictive (121) de forme concave.

18. Méthode selon la revendication 16 ou 17, caractérisée en ce que, lorsque les zones d'appui périphériques (64-94) ne sont pas en contact entre elles, la zone d'appui périphérique (94) et la surface d'appui centrale (92) du contre-plateau (16) sont dans un même plan (122) perpendiculaire audit axe de rotation commun (4).

19. Méthode selon la revendication 16, 17, ou 18 caractérisée en ce que le plateau (14) est rodé en exerçant une pression sur sa surface centrale (62) plus forte que sur sa zone périphérique (64).

20. Méthode selon la revendication 16, 17, 18 ou 19 caractérisée en ce que l'on fixe le plateau (14) sur le contre-plateau (16) par une vis centrale (86) selon l'axe de rotation (4) du plateau.

21. Méthode selon la revendication 16, 17 ou 18 caractérisée en ce que, entre les étapes d) et e), le plateau est placé dans un écrin (124) comportant un support de plateau (126) et une boîte protectrice (140), en fixant le plateau audit support et en fixant ladite boîte protectrice audit support de plateau.

22. Méthode selon la revendication 21 caractérisée en ce que l'on ferme ladite boîte protectrice par un couvercle (148).

23. Méthode selon la revendication 21 caractérisée en ce que, à l'étape e),l'écrin est positionné angulairement par rapport au contre-plateau (16), le plateau est fixé au contre-plateau à l'aide d'une vis centrale (86) et le support de plateau et la boîte protectrice sont retirés.

24. Méthode selon la revendication 21 caractérisée en ce que, pour retirer le 5 plateau dudit contre-plateau standard ou du contre-plateau de l'enregistreur/lecteur
- le plateau est placé selon une position angulaire prédéterminée,
- le support de plateau est positionné et fixé sur le plateau,
- la boîte protectrice est positionnée et fixée sur le support de plateau,
- le plateau est désolidarisé dudit contre-plateau, et
- l'ensemble formé par le plateau, le support du plateau et la boîte protectrice est extrait de l'enregistreur/lecteur.

25. Méthode selon la revendication 21 caractérisée en ce que l'ensemble 5 plateau/support de plateau/boîte protectrice est fermé par un couvercle.

## Patentansprüche

1. Vorrichtung zum Aufzeichnen und/oder Lesen von Informationen auf einem Magnetband (22) mit einem Zylinder (2), der mit einem Spalt (20) versehen ist, sowie einem Träger (12) für rotierende Magnetköpfe (18), der in dem Zylinder angebracht ist und die Positionierung der Magnetköpfe (18) bezüglich des Spalts der Trommel ermöglicht, wobei der Träger für Magnetköpfe eine Platte (14) und eine Gegenplatte (16) mit einer gemeinsamen Drehachse (4) aufweist, wobei die Platte die Magnetköpfe (18) an ihrem Umfang aufweist und die Platte (14) und die Gegenplatte (16) jeweils im wesentlichen die Form einer Scheibe aufweisen, dadurch gekennzeichnet, daß die Platte (14) und die Gegenplatte (16) jeweils gleichzeitig eine Umfangsanlagezone (64-94) und eine zentrale Anlagefläche (62-92) sowie Mittel (86) aufweisen, um die Platte (14) und die Gegenplatte (16) derart zu verformen, daß die Umfangsanlagezonen miteinander und die zentralen Anlageflächen miteinander in Kontakt liegen.

2. Vorrichtung nach Anspruch 1, dadurch gekennzeichnet, daß die Platte eine Achse (84) und die Gegenplatte eine Bohrung (102) aufweist, die um die Drehachse angeordnet sind, wobei die Bohrung (102) der Gegenplatte (16) ein Innengewinde aufweist und die Mittel zur Kontaktherstellung eine Schraube (86) aufweisen, die in das Innengewinde geschraubt wird, um die Anlagezonen (64-94) miteinander und die zentralen Anlageflächen (62-92) miteinander in Kontakt zu bringen.

3. Vorrichtung nach Anspruch 2, dadurch gekennzeichnet, daß die Platte (14) ein Haltestück (88) aufweist, das die Schraube beim Losschrauben gefangenhält und das Herausziehen der Platte ermöglicht.

4. Vorrichtung nach einem der vorhergehenden Ansprüche, dadurch gekennzeichnet, daß die zentralen Anlageflächen (62-92) jeweils die Form eines Rings haben, der um die gemeinsame Drehachse (4) zentriert ist.

5. Vorrichtung nach einem der vorhergehenden Ansprüche, dadurch gekennzeichnet, daß die Umfangsanlagezonen (64-94) jeweils die Form eines Kranzes aufweisen, der wenigstens für eine der Zonen durch Öffnungen (66) unterbrochen ist, durch die Magnetköpfe (18) hindurchtreten.

6. Vorrichtung nach einem der vorhergehenden Ansprüche, dadurch gekennzeichnet, daß sie Mittel (78-100) zur winkelmäßigen Festlegung der Platte und der Gegenplatte aufweist.

7. Vorrichtung nach Anspruch 6, dadurch gekennzeichnet, daß die Mittel zur winkelmäßigen Festlegung einen Stift (100), der an der Platte oder der Gegenplatte befestigt ist, sowie einen Festlegungsschlitz (78) oder ein Festlegungsloch aufweisen, der bzw. das in der anderen Platte oder Gegenplatte gebildet ist, wobei der Schlitz oder das Loch mit dem Stift zusammenwirkt.

8. Vorrichtung nach einem der vorhergehenden Ansprüche, dadurch gekennzeichnet, daß die Platte (14) Klötze (80) zum elektrischen Anschluß aufweist und die Gegenplatte (16) leitfähige Bereiche (82) aufweist, wobei die Anschlußklötze mit den Bereichen zusammenwirken.

9. Vorrichtung nach Anspruch 8, dadurch gekennzeichnet, daß die Gegenplatte einen elastischen Träger (97) aufweist, an dem die leitfähigen Bereiche (82) gehalten werden, wobei die Klötze (80) zum elektrischen Anschluß und die leitfähigen Bereiche (82) zusammenwirken, indem sie einen Kontaktdruck zwischen den Klötzen und den Bereichen sicherstellen.

10. Vorrichtung nach einem der vorhergehenden Ansprüche, dadurch gekennzeichnet, daß der Zylinder (2) aus zwei Trommeln, einer unteren (8) und einer oberen (6), mit im wesentlichen zylindrischer Form und dem gleichen Durchmesser besteht, wobei die Trommeln durch Befestigungsmittel (10) um ein und dieselbe Achse aneinander fest angebracht sind, die der gemeinsamen Drehachse (4) entspricht, und indem ein freier Abstand zwischen den Trommeln gelassen wird, wobei der freie Abstand den Spalt (20) definiert.

11. Vorrichtung nach Anspruch 10, dadurch gekennzeichnet, daß die Befestigungsmittel (10) für die Trommeln Mittel (106-116) zur Positionierung der oberen Trommel bezüglich der unteren Trommel aufweisen.

12. Vorrichtung nach Anspruch 11, dadurch gekennzeichnet, daß die Befestigungsmittel (10) Bremsmittel (110-112-114) aufweisen, um zu vermeiden, daß die obere Trommel im Laufe des Anbringens oder Abnehmens der oberen Trommel auf die untere Trommel fällt.

13. Behälter zum Lagern, Anordnen oder Absetzen der Platte (14) auf der Gegenplatte (16) nach der Definition eines der Ansprüche 1 bis 10, dadurch gekennzeichnet, daß er einen mit einem Element (130) zur winkelmäßigen Festlegung versehenen Plattenträger (126) und Befestigungsmittel (132) für die Platte sowie ein Schutzgehäuse (140) aufweist, das mit Mitteln (142, 154) zur Befestigung des Plattenträgers in dem Schutzgehäuse versehen ist.

14. Behälter nach Anspruch 13, dadurch gekennzeichnet, daß er ferner einen Deckel (152) aufweist, der das Schutzgehäuse verschließt.

15. Behälter nach Anspruch 13 oder 14, dadurch gekennzeichnet, daß das Schutzgehäuse (140) Mittel (144) zur winkelmäßigen Befestigung bezüglich der Befestigungsmittel (10) für die obere (6) und die untere Trommel (8) aufweist, aus denen der Zylinder (2) besteht, in dessen Innerem die Platte (14) und die Gegenplatte (16) angebracht sind.

16. Verfahren zur Positionierung der rotierenden Magnetköpfe eines Aufzeichnungs-/Lesegeräts für Magnetbänder, wobei die Magnetköpfe (18) am Umfang einer rotierenden Platte (14) befestigt sind, die eine zentrale Anlagefläche (62) und eine Umfangsanlagefläche (64) aufweist, wobei die Platte zur Befestigung an einer Gegenplatte (16) bestimmt ist, die ebenfalls eine zentrale Anlagefläche (92) und eine Umfangsanlagefläche (94) aufweist, wobei nach dem Verfahren:
a) die Platte derart bearbeitet wird, daß die zentrale Fläche (62) der Platte bezüglich einer Ebene zurückspringt, die die Umfangszone (64) der Platte enthält und senkrecht zu der Drehachse der Drehplatte liegt;
b) die Platte im Labor an einer Normgegenplatte befestigt wird und die Magnetköpfe an der Platte positioniert werden;
c) die Position der Magnetköpfe eingestellt wird und die Magnetköpfe an der Platte befestigt werden,
d) die Platte von der Normgegenplatte abgenommen wird;
e) die Platte an der Gegenplatte des Aufzeichnungs-/Lesegeräts angebracht wird, die mit der Normgegenplatte identisch ist, indem zunächst die Umfangsanlagezonen und dann die zentralen Anlagezonen miteinander in Anlage gebracht werden.

17. Verfahren nach Anspruch 16, dadurch gekennzeichnet, daß die zentrale Anlagefläche (62) und die Umfangsanlagezone (64) der Platte auf einer fiktiven Fläche (121) mit konkaver Form liegen, wenn die Umfangsanlagezonen (64-94) nicht miteinander in Kontakt stehen.

18. Verfahren nach Anspruch 16 oder 17, dadurch gekennzeichnet, daß die Umfangsanlagefläche (94) und die zentrale Anlagefläche (92) der Gegenplatte (16) in ein und derselben zu der gemeinsamen Drehachse (4) senkrechten Ebene (122) liegen, wenn die Umfangsanlagezonen (64-94) nicht miteinander in Kontakt stehen.

19. Verfahren nach Anspruch 16, 17 oder 18, dadurch gekennzeichnet, daß die Platte (14) eingeschliffen wird, indem auf die zentrale Fläche (62) ein höherer Druck als auf die Umfangszone (64) ausgeübt wird.

20. Verfahren nach Anspruch 16, 17, 18 oder 19, dadurch gekennzeichnet, daß die Platte (14) durch eine zentrale Schraube (86) längs der Drehachse (4) der Platte an der Gegenplatte (16) befestigt wird.

21. Verfahren nach Anspruch 16, 17 oder 18, dadurch gekennzeichnet, daß die Platte zwischen den Schritten d) und e) in einem Behälter (124) angeordnet wird, der einen Plattenträger (126) sowie ein Schutzgehäuse (140) aufweist, indem die Platte an dem Träger und das Schutzgehäuse an dem Plattenträger befestigt werden.

22. Verfahren nach Anspruch 21, dadurch gekennzeichnet, daß das Schutzgehäuse durch einen Deckel (148) verschlossen wird.

23. Verfahren nach Anspruch 21, dadurch gekennzeichnet, daß der Behälter im Schritt e) bezüglich der Gegenplatte (16) winkelmäßig positioniert wird, die Platte mit Hilfe einer zentralen Schraube (86) an der Gegenplatte befestigt wird und der Plattenträger und das Schutzgehäuse abgenommen werden.

24. Verfahren nach Anspruch 21, dadurch gekennzeichnet, daß zum Abnehmen der Platte von der Normgegenplatte oder der Gegenplatte des Aufzeichnungs-/Lesegeräts
- die Platte in einer vorbestimmten Winkelposition angeordnet wird,
- der Plattenträger an der Platte positioniert und befestigt wird,
- das Schutzgehäuse an dem Plattenträger positioniert und befestigt wird,
- die Platte von der Gegenplatte gelöst wird, und
- die durch die Platte, den Plattenträger und das Schutzgehäuse gebildete Einheit aus dem Aufzeichnungs-/Lesegerät herausgezogen wird.

25. Verfahren nach Anspruch 21, dadurch gekennzeichnet, daß die Einheit aus Platte/Plattenträger/Schutzgehäuse durch einen Dekkel verschlossen wird.

## Claims

1. Apparatus for recording and/or reading information on a magnetic tape (22), the apparatus comprising a cylinder (2) provided with a slot (20) and a support (12) for rotary magnetic heads (18) mounted inside said cylinder and enabling said magnetic heads (18) to be positioned relative to the slot of said cylinder, the magnetic head support comprises a turntable (14) and a countertable (16) sharing a common axis of rotation (4), said turntable including said magnetic heads (18) around its periphery, and the turntable (14) and the countertable (16) being substantially in the form of a disk, the said apparatus being characterized in that the turntable (14) and the countertable (16) each include both a peripheral support zone (64-94) and a central support surface (62-92) and means (86) for deforming the turntable (14) and the countertable (16) so that the peripheral support zones be in contact with each other and the central support surfaces be in contact with each other.

2. Apparatus according to claim 1, characterized in that the turntable includes a shaft (84) and the countertable includes a bore (102) situated around said axis of rotation, the bore (102) of said countertable (16) being tapped, and said means for putting said support zones (64-94) into contact with each other and said central support surfaces (62-92) into contact with each other comprising a screw (86) that screws into said tapped bore.

3. Apparatus according to claim 2, characterized in that said turntable (14) includes a retaining part (88) which holds said screw captive while it is being unscrewed and which enables the turntable to be extracted.

4. Apparatus according to any preceding claim, characterized in that each of said central support surfaces (62-92) is in the form of a ring centered about said common axis of rotation (4).

5. Apparatus according to any preceding claim, characterized in that each of said peripheral support zones (64-94) is in the form of a ring, at least one of which is interrupted by openings (66) through which said magnetic heads (18) pass.

6. Apparatus according to any preceding claim, characterized in that said apparatus includes angular indexing means (78-100) for indexing the turntable relative to the countertable.

7. Apparatus according to claim 6, characterized in that said annular indexing means comprise a pin (100) fixed to one of the turntable and the countertable, and an indexing hole or slot (78) formed through the other one of the countertable and the turntable, said hole or slot co-operating with said pin.

8. Apparatus according to any preceding claim, characterized in that the turntable (14) includes electrical connection tabs (80) and the countertable (16) includes conductive areas (82), said connection tabs co-operating with said areas.

9. Apparatus according to claim 8, characterized in that said countertable includes a resilient support (97) on which said conductive areas (82) are held, said electrical connection tabs (80) and said conductive areas (82) co-operating by providing contact pressure between said tabs and said areas.

10. Apparatus according to any preceding claim, characterized in that said cylinder (2) comprises a bottom drum (8) and a top drum (6) which are substantially cylindrical in shape and of the same diameter, said drums being secured to each other about a common axis which corresponds to said common axis of rotation (4) by fixing means (10) which leave a gap between said drums, said gap defining said slot (20).

11. Apparatus according to claim 10, characterized in that said fixing means (10) for fixing the drums together include means (106-116) for positioning the top drum relative to the bottom drum.

12. Apparatus according to claim 11, characterized in that said fixing means (10) include brake means (110-112-114) for preventing the top drum dropping onto the bottom drum while the top drum is being mounted or dismounted.

13. A case for storing, installing, or removing said turntable (14) on said countertable (16) as defined in any one of claims 1 to 10, the case being characterized in that it includes a turntable support (126) provided with an annular indexing element (130) and with turntable fixing means (132), and a protective box (140) provided with means (142, 154) for fixing said turntable support inside said protective box.

14. A case according to claim 13, characterized in that it further includes a lid (152) closing said protective box.

15. A case according to claim 13 or 14, characterized in that said protective box (140) includes angular fixing means (144) for fixing it angularly relative to the fixing means (10) for fixing together the top and bottom drums (6, 8) which constitute the cylinder (2), inside of which the turntable (14) and the countertable (16) are installed.

16. A method of positioning the rotary magnetic heads of a recorder/reader unit for magnetic tapes, the magnetic heads (18) being fixed at the periphery of a rotary turntable (14) which includes a central support surface (62) and a peripheral support zone (64), said turntable being designed to be fixed to a countertable (16) which also includes a central support surface (92) and a peripheral support zone (94), method according to which :
a/ said turntable is machined so that said central surface (62) of the turntable is set back relative to a plane containing said peripheral zone (64) of the turntable and perpendicular to the axis of rotation (4) of the rotary turntable;
b/ the turntable is fixed on a standard countertable in a laboratory and the magnetic heads are positioned on the turntable;
c/ the positioning of the magnetic heads is adjusted and the magnetic heads are fixed to the turntable;
d/ the turntable is dismounted from the countertable; and
e/ the turntable is mounted on the countertable of the recorder/reader unit that is identical to the standard countertable by initially pressing said peripheral support zones against each other and then pressing said central support zones against each other.

17. A method according to claim 16, characterized in that when the peripheral support zones (64-94) are no longer in contact with each other, the central support surface (62) and the peripheral support zone (64) of the turntable lie on a theoretical surface (121) that is concave in shape.

18. A method according to claim 16 or 17, characterized in that when the peripheral support zones (64-94) are not in contact with each other, the peripheral support zone (94) and the central support surface (92) of the countertable (16) lie in the same plane (122) perpendicular to said common axis of rotation (4).

19. A method according to claim 16, 17 or 18, characterized in that the turntable (14) is lapped while exerting greater pressure on its central surface (62) than on its peripheral zone (64).

20. A method according to claim 16, 17, 18 or 19, characterized in that the turntable (14) is fixed to the countertable (16) by a central screw (86) lying on the axis of rotation (4) of the turntable.

21. A method according to claim 16, 17 or 18, characterized in that between steps d/ and e/, the turntable is placed in a case (124) including a turntable support (126) and a protective box (140), with the turntable being fixed to said support and with said protective box being fixed to said turntable support.

22. A method according to claim 21, characterized in that said protective box is closed by a lid (148).

23. A method according to claim 21, characterized in that at step e/ the case is positioned angularly relative to the countertable (16), the turntable is fixed to the countertable by means of a central screw (86), and the turntable support and the protective box are withdrawn.

24. A method according to claim 21, characterized in that to withdraw the turntable from said standard countertable or from the countertable of the recorder/reader unit:
- the turntable is placed in a predetermined angular position;
- the turntable support is positioned and fixed on the turntable;
- the protective box is positioned and fixed on the turntable support;
- the turntable is disconnected from said countertable; and
- the assembly constituted by the turntable, the turntable support, and the protective box is extracted from the recorder/reader unit.

25. A method according to claim 21, characterized in that the assembly comprising the turntable, the turntable support, and the protective box is closed by a lid.
